(19) **Europäisches Patentamt / European Patent Office / Office européen des brevets**

(11) **EP 3 401 789 B1**

(12) **EUROPEAN PATENT SPECIFICATION**

(45) Date of publication and mention of the grant of the patent:
**12.07.2023 Bulletin 2023/28**

(21) Application number: **17170071.9**

(22) Date of filing: **09.05.2017**

(51) International Patent Classification (IPC):
**G06F 11/07** *(2006.01)*

(52) Cooperative Patent Classification (CPC):
**G06F 11/0754**

(54) **ANOMALY DETECTION IN TIME SERIES**

ANOMALIEDETEKTION IN ZEITREIHEN

DÉTECTION D'ANOMALIES DANS UNE SÉRIE TEMPORELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.11.2018 Bulletin 2018/46**

(73) Proprietor: **Skyline Communications NV**
**8870 Izegem (BE)**

(72) Inventors:
 • **LAPON, Jorn**
   **8310 Assebroek (BE)**
 • **LEDOUX, Veerle**
   **8570 Vichte (BE)**
 • **DREESEN, Dennis**
   **8870 Izegem (BE)**
 • **FERRANTI, Micol**
   **8000 Brugge (BE)**

(74) Representative: **IP HILLS NV**
**Hubert Frère-Orbanlaan 329**
**9000 Gent (BE)**

(56) References cited:
   **WO-A2-02/073351**   **US-A1- 2014 006 325**
   **US-A1- 2016 162 348**   **US-B1- 6 993 458**
   **US-B1- 7 310 590**

## Description

### Field of the Invention

The present invention generally relates, amongst others, to a method and device for automated and real-time detection of anomalies in a time series.

A time series is an ordered sequence of values in time representing the time-dependent state of a process or device or, more general, a certain observed phenomenon. In a production process, the values may for example be obtained from sensors installed along the production line. In telecommunication systems, the values may be generated or derived by forwarding nodes such as access points, switches, routers, gateway and base stations in order to obtain insight in the performance of the communication chain. An anomaly in a time series is then the occurrence of an unexpected data pattern in the time series, i.e., an unexpected or aberrant behaviour.

### Background of the Invention

In large systems, it is desirable to perform anomaly detection in a fully automated way, i.e., not only without intervention or supervision of an operator but also without manual configuration or parameter settings. This then allows processing of large amounts of different time series in parallel on a centralized or distributed computing system. New time series can then be added at any time without knowledge of the specific properties of the series.

As an anomaly relates to an unexpected behaviour, detecting an anomaly intrinsically requires a memory or data store component in order to track past behaviour which serves as a reference point for present behaviour. However, in order to support as many time series as possible on a single computing system, both the amount of memory and processing should be kept at a minimum.

One known method of anomaly detection is to use two different time series and make use of the correlation between the two for defining an anomaly within one of the two time series. A disadvantage of this method is that two correlated time series are needed and, moreover, the correlation itself must first be found.

Another method makes use of a sliding window wherein a self-correlation between the current sliding window and a previous window is performed. A disadvantage of this method is that it requires a lot of memory for storing the values in the sliding window, that the anomaly detection is related to the choice of the sliding window and that a correlation operation requires a lot of computational power.

Another approach is to decompose the time series in a multi-scale or multi-resolution representation, for example by a discrete wavelet transformation (DWT). This allows identifying aberrant behaviour within the different time scales. Especially for visualization, DWT has proven to be a strong tool. However, for real-time detection of anomalies, a DWT of a time series is not sufficient.

Further applications selectively reconstruct the time series from the DWT coefficients in order to obtain a filtered time series and then detect outliers or change points in the filtered time series and derive therefrom the occurrence of an anomaly. A problem with this approach is that the selection of coefficients of the different time scales requires insight in the type and time scales of the anomalies. Therefore, this solution is not suited for real-time detection of anomalies in any kind of time series.

US2014/0006325A1 discloses an approach for detecting an anomaly in a processing environment. The approach includes using a processor to obtain a series of values collected within a processing interval of the processor in the processing environment. The processor normalizes this first series of values to obtain a first series of normalized values. A second series of normalized values is generated by applying a predictive filter to the first series of normalized values. A comparison score is generated from the normalized values by comparing the first series of normalized values and the second series of normalized values. The approach then determines whether the comparison score represents an anomaly relative to at least one other comparison score derived from values collected within the processing interval.

### Summary of the Invention

It is an object of the present invention to overcome the above identified shortcomings and to provide, amongst others, in a method for real-time detection of anomalies in a single time series where there is no information at hand on the type of anomaly or on the type of data that is analysed.

According to a first aspect, this object is achieved by the computer-implemented method according to claim 1.

The method thus iteratively performs steps a) to f). The iteration is triggered by the reception of a next value in the time series, i.e., a new and thus most recent value in a real-time context. The method keeps track of derived time series which are the results of a multi-resolution transformation based on the actual time series. As each derived time series provides an aspect of the original time series in a different temporal resolution, not all derived time series will be updated for each newly obtained value. Then, according to step d), the newly obtained values of the derived time series are compared with predictions of those values that were obtained during a previous iteration of the method. These predictions also have a confidence indicator which is indicative for the correctness of the prediction and thus for a range or band where the actual value is expected to lie in. Then, in step e), when the next derived value does not lie within the expected range, it is considered a change point, i.e., to deviate from the expected course of the derived time series. Such a change point may then be an indication that an anomaly has occurred in the time series. Under step f), depending on what change points have occurred at what resolutions in the different derived time series, it is decided whether an anomaly has occurred in the time series. This step f) may be performed every time a new change point in one of the derived time series has occurred. In order to prepare the iterative method for the next iteration, a prediction is also made for the second next or future value in each of the derived times series that have been updated with a new value under step b).

The above method is thus not based on a threshold passing of the time series, either by a static or dynamic threshold. The method can therefore detect subtle changes over time and will not necessarily trigger false positives when the values in the time series drift over time. Furthermore, all steps, i.e., the multi-resolution transformation, the prediction of future values and confidence indicators and the detection of the change points, are all independent from the type of data in the time series. In other words, no knowledge of the data is needed in order to detect an anomaly. Another advantage is that no repeated passes of the time series is needed because all steps can be solely based on values obtained from a previous step. Because changes are tracked in several resolutions, more complex behavioural changes can be detected such as for example a change in variance, a subtle level shift where the change in mean is smaller than the noise and trend changes both in the long and short term. Furthermore, based on change points occurring at different resolutions, also different types or severities of anomalies can be detected.

Because of the different time resolutions in the derived time series, change points may first occur at the highest resolution and then appear gradually after each further obtained value at a lower resolution. This allows an early but coarse detection at an early state and a finer but later improvement of the anomaly detection at a later stage. Furthermore, large changes will be detected very early and small changes will only be detected at the lower resolutions, hence, later. A further advantage of the above method is that it will also quickly recover from lost values in the time series just by replacing the one or more lost values with the previous value.

Further, a second time series is derived from the time series and then another multi-resolution transformation is performed on this second time series. By combining the detection of change points from both the first and second more information can be derived about the type of anomaly, for example a change in variance will be much better detectable. Such a change in variance will be hard to detect from the first transformation alone when the variance is decreasing.

According to an embodiment, the predicting is performed by a double exponential smoothing, i.e., a prediction based on all previous values of the derived time series, but with an exponentially decreasing weight.

An advantage of this is that only the most recent values of the times series and the derived time series must be preserved thereby decreasing storage and processing requirements.

Advantageously, the derived time series corresponds to a series of detail coefficients at a respective resolution of the multi-resolution transformation.

Typically, when performing a multi-resolution transformation, detail coefficients and approximation coefficients are obtained at each resolution, also referred to as a scale or level. By using the detail coefficients for the derived time series, the method will adapt to a new behaviour in the time series very quickly. As a result, a change in behaviour will not affect or obfuscate future changes in the behaviour.

More advantageously, the one or more multi-resolution transformations are one or more discrete wavelet decompositions.

More advantageously, the first multi-resolution transformation is performed on each consecutive pair of values of the time series and/or the second multi-resolution transformation is based on each pair of consecutive absolute values of differences between each pair of consecutive values of the time series.

This differentiates the transformation from a typical discrete wavelet transform such as the Haar transform because also consecutive values between the pairs at each resolution are used to calculate the detail coefficients. This has the advantage that sudden changes in the series between the pairs will also be detected as a change point such as for example a level shift that occurs between consecutive pairs.

By using change point detection according to this embodiment, different types of anomalies may be identified:

- an anomaly is identified as an outlier when two consecutive change points with different signs are detected in at least one of the derived time series;
- an anomaly is identified as a level shift when detecting a single change point in the first set of derived time series;
- an anomaly is identified as a change in the variance of the time series when detecting a change point in the second set of the derived times series;
- an anomaly is identified as a change in the trend of the time series when detecting a change point in the second set of the derived time series and a plurality of change points in the first set of the derived time series.

According to an embodiment, the confidence indicator further defines a confidence interval of the previously predicted derived value. A change point is then detected when the next derived value falls outside this confidence interval.

This way, also a severity can be assigned to the change point, for example by measuring the distance between the next derived value and this confidence interval.

According to an embodiment, the method further comprises the following steps:

- comparing the detected anomaly with stored previously detected anomalies; and

- assigning an importance to the detected anomaly based on the difference between the detected anomaly and the previously detected anomalies.

As different types and severities of anomalies can be derived, it is also possible to compare anomalies with each other. This way, anomalies that repeatedly occur can be assigned as less important than a type of anomaly that occurs for the first time. This has the advantage that changes in the time series that appear at first as an anomaly will be treated less and less important as they reoccur.

According to a second aspect, the invention relates to a computer program product comprising computer-executable instructions for performing the method according to the first aspect when the program is run on a computer.

According to a third aspect, the invention relates to a computer readable storage medium comprising the computer program product according to the second aspect.

According to a fourth aspect, the invention relates to a data processing system programmed for carrying out the method according to the first aspect.

## Brief Description of the Drawings

Fig. 1 illustrates a multi-resolution transformation of a time series according to an embodiment of the invention; and

Fig. 2 illustrates a multi-resolution transformation of a series of absolute values of differences between consecutive values of the time series of Fig. 1 according to an embodiment of the invention; and

Fig. 3 illustrates steps for detection of an anomaly in a time series according to an embodiment of the invention; and

Fig. 4 shows plots of a multi-resolution transformation of a time series and of a series of absolute values of differences between consecutive values of the time series; and

Fig. 5 illustrates steps for determining a type, severity and importance of an anomaly according to an embodiment of the invention; and

Fig. 6 shows a plot of an outlier anomaly type in a time series according to an embodiment of the invention; and

Fig. 7 shows a plot of a level shift anomaly type in a time series according to an embodiment of the invention; and

Fig. 8 shows a plot of a variance change anomaly type in a time series according to an embodiment of the invention; and

Fig. 9 shows a plot of a trend change anomaly type in a time series according to an embodiment of the invention; and

Fig. 10 illustrates a suitable computing system for performing steps according to embodiments of the invention.

## Detailed Description of Embodiment(s)

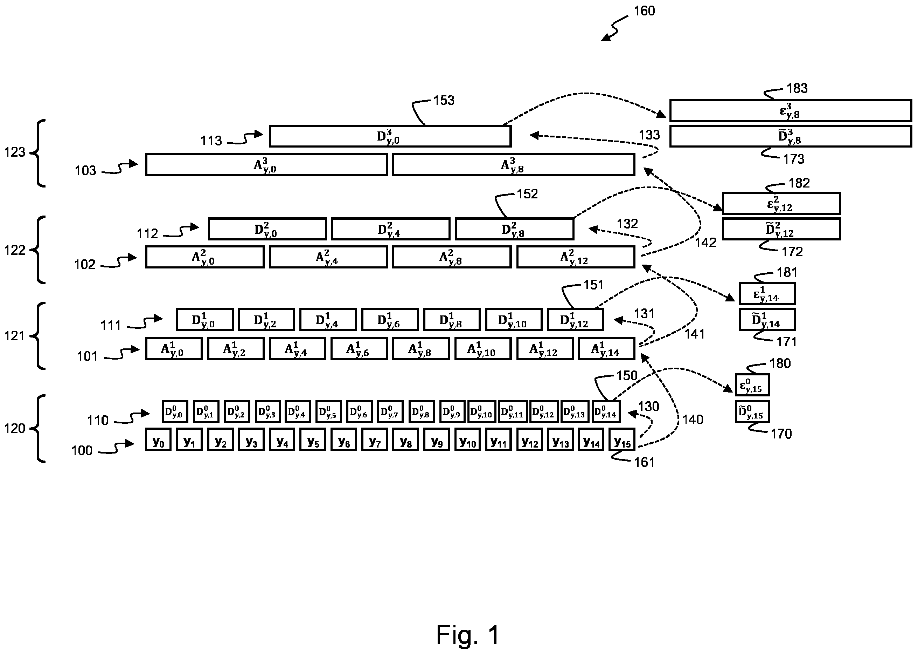

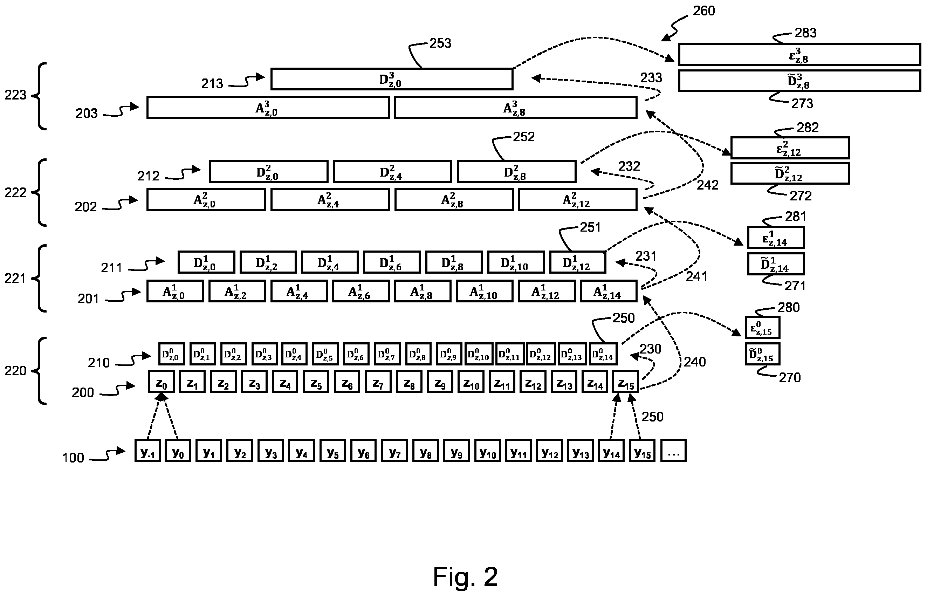

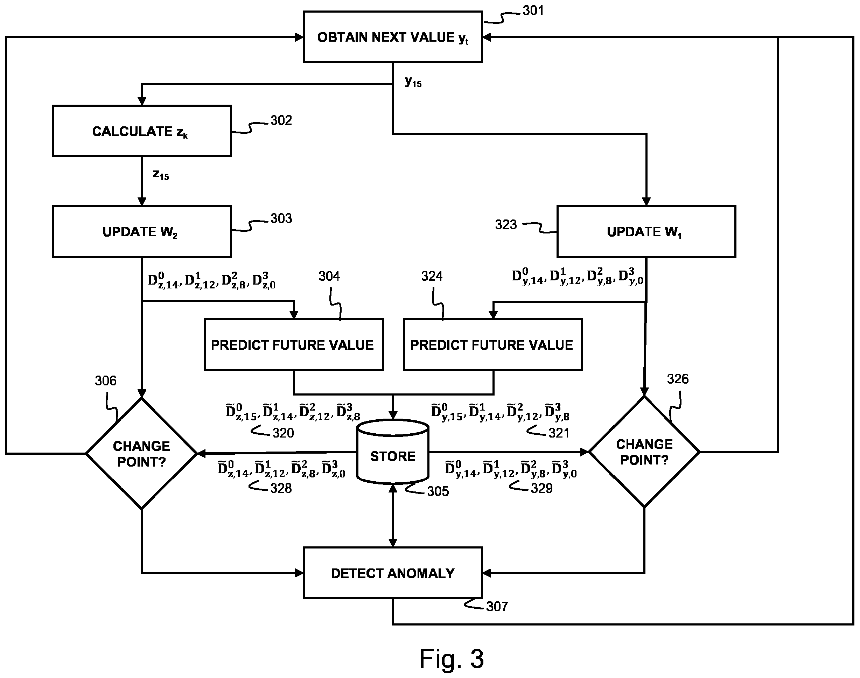

The present invention relates to the real-time detection of anomalies in a time series. Fig. 3 illustrates steps performed by a suitable computing system for detecting anomalies in a time series according to an embodiment of the invention. Fig. 3 will be described with further reference to Fig. 1 and 2. In a first step 301, a next value $y_t$ of a time series is obtained. In Fig. 1 and Fig. 2, the time series 100 is illustrated by the consecutive values $y_0$ to $y_{15}$ wherein $y_{15}$ (161)

represents the most recent value in the time series 100 and thus illustrates the obtained next value $y_t$ of step 301.

Then, the method proceeds to step 323 wherein the wavelet stream $W_1$ (160) is updated as also illustrated by Fig. 1. Wavelet stream W1 is a multi-resolution wavelet transformation of the time series 100 comprising different resolutions ranging from the highest resolution 120 to the lowest resolution 123. The amount of resolutions is not limited to four, but may be selected depending on the required level of detail, storage constraints and processing constraints. For example, when the time step is one second and the amount of resolutions is 16, then the lowest resolution will show a time step of more than half a day. At each resolution 120-123, wavelet detail coefficients 110-113 and wavelet approximation coefficients 101-103 are updated with respective new detail coefficients 150, 151, 152, 153 and new approximation coefficients. For the later detection of anomalies only the detail coefficients will be used while the approximation coefficients are solely used as intermediate step for the calculation of the detail coefficients. A series of detail coefficients for a certain resolution is further also referred to as a derived time series. The detail coefficients may be obtained from the previous approximation coefficients by the following recursive formula:

$$S_L = 2^L$$

$$k(t,L) = t * S_L$$

$$g(t,L) = k(t,L) + S_{L-1}$$

$$A^0_{k(t,0)} = y_t, \quad t = 0,1,2,\ldots$$

$$D^L_{k(t,L)} = A^L_{k(t,L)} - A^L_{k(t+1,L)}, \quad L = 0,1,2,\ldots, \quad t = 0,1,2,\ldots$$

$$A^L_{k(t,L)} = (A^{L-1}_{k(t,L)} + A^{L-1}_{g(t,L)})/2, \quad L = 1,2,\ldots, \quad t = 0,1,2,\ldots$$

wherein

- $y_t$ is the data point in the time series 100 at time t;
- $L$ is the level of resolution wherein $L = 0$ corresponds to the resolution; of the original time series 100, i.e., the highest resolution;
- $D^L_{k(t,L)}$ is the $k^{th}$ detail coefficient at level L derived from $y_t$ and $y_{t+1}$;
- $A^L_{k(t,L)}$ is the $k^{th}$ approximation coefficient at level L derived from $y_t$ and $y_{t+1}$.

The above discrete wavelet decomposition is similar to the Haar wavelet transform. An important difference is that the detail coefficients are not only defined by differences between two consecutive pairs of the approximations coefficients but also by differences between overlapping pairs. The calculation of the approximation coefficients is illustrated in Fig. 1 by the steps 140, 141 and 142 and the calculation of the detail coefficients by steps 130, 131, 132 and 133. Fig. 1 further depicts the situation where all coefficients are updated upon receipt of the next value 161. However, not all coefficients will be updated within every iteration.

The method then proceeds to step 324 and estimates or predicts for each newly derived detail coefficient from step 323 the next value in the time series 100 of the respective detail coefficient. Also, a confidence indicator is calculated indicative for a possible error of the estimation, i.e., as long as the actual future value is within the range as indicated by the confidence indicator, the future value is considered as an expected value in the time series 100. This estimation is illustrated in Fig. 1 by the estimated values 170, 171, 172, 173 and confidence indicators 180, 181, 182, 183 as estimation of the respective detail coefficients 150, 151, 152, 153.

As the method of Fig. 3 is to be performed in real-time, the memory footprint of the prediction step 324 should be kept as low as possible while offering a good accuracy. Preferably a double exponential smoothing is used for predicting the future values. An estimation of a next detail coefficient $\tilde{D}_{k+1}$ may then be obtained by the following equations:

$$\widetilde{D}_{k+1} = l_k + b_k$$

$$b_k = \beta(l_k - l_{k-1}) + (1 - \beta)b_{k-1}$$

$$l_k = \alpha . D_k + (1 - \alpha)(l_{k-1} + b_{k-1})$$

The calculation is thus only based on values calculated in the previous iteration. The parameters $\alpha$ and $\beta$ are adaptation parameters and are chosen between 0 and 1.

The confidence indicator may then be calculated as an allowed absolute deviation from the estimated value. Various techniques may be used for calculating this deviation. Preferably, the deviation is based on the prediction error of the previous estimation and on the previously estimated deviation.

The predicted value and confidence indicator (321) are then stored in data store 305 together with the updated values of the derived time series and the temporary values $b_k$ and $l_k$. As the above steps are only based on the previous values, the previous values and previous estimated values may then be erased from the memory 305 together with the previous temporary values $b_{k-1}$ and $l_k$-1.

In parallel or sequentially, after the updating step 323, the method proceeds to step 326. In this step, the previously estimated values 329 of the newly derived values obtained from step 323 are retrieved from the memory 305 and compared with the respective newly derived values in order to establish whether the newly derived value in each derived time series represents a change point in the time series, i.e., whether the newly derived value is expected or unexpected. A change point is then detected when the newly derived value deviates more from the previously estimated value than indicated by the confidence indicator. For example, when the confidence indicator is expressed by a maximum absolute deviation $d_k$, then a change point is detected when a newly derived value $D_k$ falls outside the following confidence band:

$$(\widetilde{D}_k - \delta . d_k, \widetilde{D}_k + \delta . d_k)$$

wherein

-  $\tilde{D}_k$ is the previously calculated estimation of the value $D_k$
-  $\delta$ is a scaling factor, preferably selected from the range from 2 to 3

This comparison 326 is performed for all newly derived values of the derived time series, e.g., for values 150, 151, 152, 153 in the respective derived series 110, 111, 112, 113. When one or more of the newly derived values fall outside the confidence band, then the method proceeds to step 307 where it is determined if the change point is categorized as an anomaly and, if so, what is the type and severity of the anomaly. When no change point is detected, the method proceeds to step 301 and waits for the next value in the time series. As the previously estimated values 329 are no longer needed at this point, they may be removed from data store 305.

In parallel or sequentially to performing the steps 323, 324, 326 on the derived time series 110 to 113 of the multi-resolution transformation 160, the method performs similar steps 302 to 306 on a second multi-resolution transformation 260 as further illustrated in figure 2. The difference with multi-resolution transformation 160 is that the transformation 260 is not calculated directly from the time series 100, but that the time series 100 is first converted into a second time series 200, further referred to as the absolute time series 200. This conversion step is performed in step 302 after the next value $y_t$ is obtained in step 301. In conversion step 302, a next absolute value $z_t$ is calculated from $y_t$ by the following equation:

$$z_t = |y_t - y_{t-1}|$$

In the example of Fig. 2, the next value in the time series corresponds to $y_{15}$ and the next absolute value $z_{15}$ is calculated (250) as $|y_{15} - y_{14}|$.

Then, the method proceeds to step 303 wherein the wavelet stream $W_2$ (260) is updated as also illustrated by Fig. 2. Wavelet stream $W_2$ is a multi-resolution wavelet transformation of the absolute time series 200 comprising different resolutions ranging from the highest resolution 220 to the lowest resolution 223. At each resolution 220-223, wavelet detail coefficients 210-213 and wavelet approximation coefficients 201-203 are updated with respective new detail coefficients 250, 251, 252, 253 and new approximation coefficients. For the later detection of anomalies only the detail coefficients will be used while the approximation coefficients are solely used as intermediate step for the calculation of the detail coefficients. The detail coefficients and thus updated derived time series of the absolute time series may be obtained from the previous approximation coefficients by the following recursive formula:

$$S_L = 2^L$$

$$k(t, L) = t * S_L$$

$$g(t, L) = k(t, L) + S_{L-1}$$

$$A^0_{k(t,0)} = z_t, \quad t = 0,1,2, \ldots$$

$$D^L_{k(t,L)} = A^L_{k(t,L)} - A^L_{k(t+1,L)}, \quad L = 0,1,2, \ldots, \quad t = 0,1,2, \ldots$$

$$A^L_{k(t,L)} = (A^{L-1}_{k(t,L)} + A^{L-1}_{g(t,L)})/2, \quad L = 1,2, \ldots, \quad t = 0,1,2, \ldots$$

wherein

- $z_t$ is the data point in the absolute time series 200 at time t as calculated in step 302;
- $L$ is the level of resolution wherein $L = 0$ corresponds to the resolution of the original time series 100, i.e., the highest resolution;
- $D^L_{k(t,L)}$ is the $k^{th}$ detail coefficient at level L derived from $z_t$ and $z_{t+1}$;
- $A^L_{k(t,L)}$ is the $k^{th}$ approximation coefficient at level L derived from $z_t$ and $z_{t+1}$.

The above discrete wavelet decomposition is similar to the Haar wavelet transform with the difference that the detail coefficients are not only defined by differences between two consecutive pairs of the approximations coefficients but by differences between overlapping pairs. The calculation of the approximation coefficients is illustrated in Fig. 2 by the steps 240, 241 and 242 and the calculation of the detail coefficients by steps 230, 231, 232 and 233. Fig. 2 further depicts the situation where all coefficients are updated upon receipt of the next value $z_{15}$, but not all coefficients will be updated on every iteration.

The method then proceeds to step 304 and estimates for each newly derived detail coefficient from step 303 the next value in the absolute time series 200 of the respective detail coefficient. Also, a confidence indicator is calculated indicative for a possible error of the estimation, i.e., as long as the actual future value is within the range or band as indicated by the confidence indicator, the future value is considered as an expected value in the absolute time series 200. This estimation is illustrated in Fig. 2 by the estimated values 270, 271, 272, 273 and confidence indicators 280, 281, 282, 283 as estimation of the respective detail coefficients 250, 251, 252, 253.

As the method of Fig. 3 is to be performed in real-time, the memory footprint of the prediction step 304 should be kept as low as possible while offering a good accuracy. Preferably a double exponential smoothing is used for predicting the future values. An estimation of a next value $\widetilde{D}_{k+1}$ may then be obtained by the following equations:

$$\widetilde{D}_{k+1} = l_k + b_k$$

$$b_k = \beta(l_k - l_{k-1}) + (1 - \beta)b_{k-1}$$

$$l_k = \alpha . D_k + (1 - \alpha)(l_{k-1} + b_{k-1})$$

The calculation is thus only based on values calculated in the previous iteration. The parameters $\alpha$ and $\beta$ are adaptation parameters and are chosen between 0 and 1.

The confidence indicator may then be calculated as an allowed absolute deviation from the estimated value. Various techniques may be used for calculating this deviation. Preferably, the deviation is based on the prediction error of the previous estimation and on the previously estimated deviation.

The predicted value and confidence indicator 320 are then stored in data store 305 together with the updated values of the derived time series. As the above steps are only based on the previous values, the previous values and previous estimated values may be erased from the memory 305.

In parallel or sequentially, after the updating step 303, the method proceeds to step 306. In this step, the previously estimated values 328 of the newly derived values obtained from step 303 are retrieved from the memory 305 and compared with each other in order to establish whether the newly derived value in each derived time series represents a change point in the time series, i.e., whether the newly derived value is expected or unexpected. A change point is then detected when the newly derived value deviates more from the previously estimated value than indicated by the confidence indicator. For example, when the confidence indicator is expressed by a maximum absolute deviation $d_k$, then a change point is detected when a newly derived value $D_k$ falls outside the following confidence band:

$$(\widetilde{D}_k - \delta . d_k, \widetilde{D}_k + \delta . d_k)$$

wherein

- $\tilde{D}_k$ is the previously calculated estimation of the value $D_k$
- $\delta$ is a scaling factor, preferably selected from the range of 2 to 3

This comparison 306 is performed for all newly derived values of the derived time series, e.g., for values 250, 251, 252, 253 in the respective derived series 210, 211, 212, 213. When one or more of the newly derived values fall outside the confidence band, then the method proceeds to step 307 where it is determined if the change point is categorized as an anomaly and, if so, what is the type and severity of the anomaly. When no change point is detected, the method proceeds to step 301 and waits for the next value in the time series. As the previously estimated values 328 are no longer needed at this point, they may be removed from data store 305. When change points are detected in both steps 306 and 326, then the anomaly detection step is performed from both detected change points.

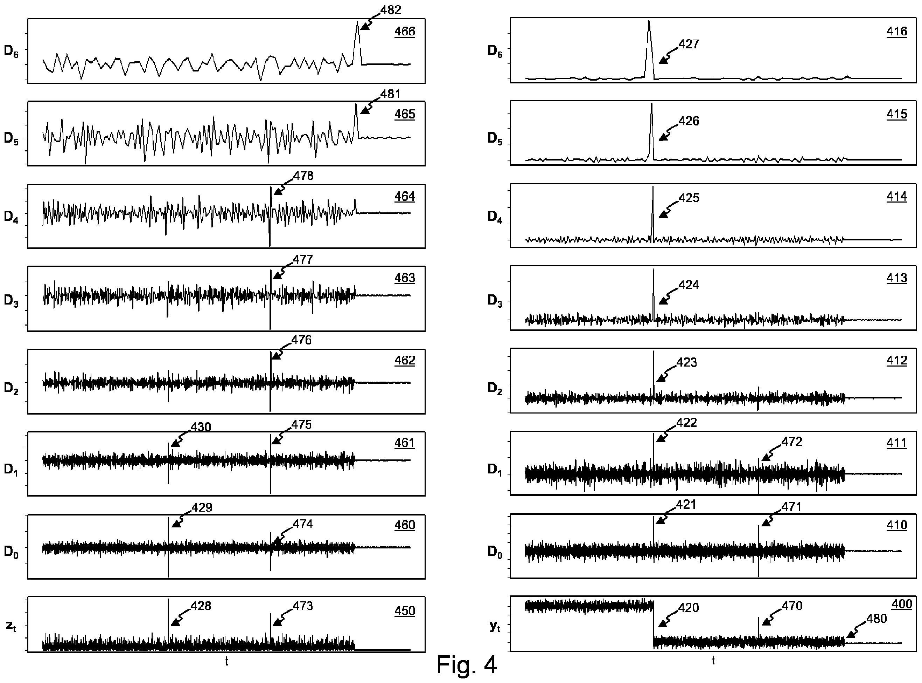

Fig. 4 shows exemplary plots of a multi-resolution decomposition of a time series 400 according to the above method as an illustration of how change points are detected for different anomalies. Plot 400 illustrates a time series 400 comprising three different anomalies: a level shift 420, an outlier 470 and a change in variance 480, all occurring at different points in time. Plots 410 to 416 illustrate the derived time series from time series 400, starting with plot 410 at the highest resolution and ranging to plot 416 at the lowest resolution. Plot 450 represents the absolute time series as obtained from step 302. Plots 460 to 466 illustrate the derived time series from absolute time series 450, starting with plot 460 at the highest resolution and ranging to plot 466 at the lowest resolution. Derived time series 460 to 466 are further also referred to as absolute derived time series. When the anomaly 420 occurs in the time series 400, a change point 421 to 427 will be detected under step 326 of the above method from the respective derived time series 410 to 416 and a change point 429 and 430 will be detected under step 306 of the above method from the respective derived time series 460 and 461. When the anomaly 470 occurs in the time series 400, two change points with different signs 471 and 472 will be detected under step 326 of the above method from each respective derived time series 410 and 411 and two change points with different signs 474 to 478 will be detected under step 306 of the above method from the respective derived time series 460 to 464. When the anomaly 480 occurs in the time series 400, no change points will be detected under step 326 of the above method and a change point 481 and 482 will be detected under step 306 of the above method from the respective derived time series 465 to 466.

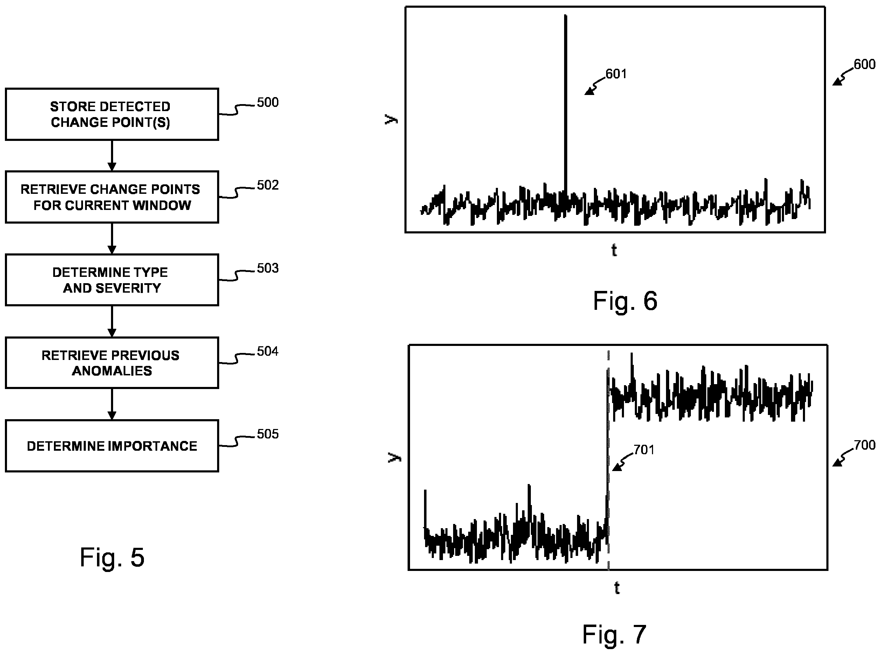

Fig. 5 illustrates different steps that are performed under step 307 of Fig. 3 for the detection of an anomaly when a change point has been detected. In a first step 500, the change point is stored in memory 305, for example by storing the value, the estimated value, confidence indicator that triggered the change point and the severity of the change point. The severity of the change point is, for example, determined by the relative distance between the value and the confidence band. Then, in the next step 502, all change points that occurred during a last predetermined time window are retrieved from this memory 305. This way, change points that were detected close to each other can be related to a single anomaly. The predetermined time window is preferably selected according to the polling time of the parameter, i.e., according to the lowest resolution of the derived time series..

Then, in the next step 503, the type of the anomaly and the severity of the anomaly is determined. As already illustrated in Fig. 4, the type of anomaly may be derived from the detected change points, i.e., in which derived time series the change points have occurred in the predetermined time window and how the change points occurred in the respective derived time series.

A first type of anomaly that may be detected under step 503 is an outlier as illustrated in Fig. 6. An outlier 601 corresponds to a short positive or negative peak in the actual data of the time series 600 or, in other words, to a sudden change that quickly goes back to normal. A set of change points is identified as an outlier when a set of change points has the following properties:

- two consecutive change points are detected at a certain resolution in a single derived time series;
- the consecutive change points have opposite signs;
- the relative magnitude of the change points, i.e., the distance between the actual value and the confidence band relative to the size of the confidence band, decreases with decreasing resolution.

Furthermore, the level of resolution at which the change points still occur and the distance between the opposite change points is a measure of the duration of the outlier. When an outlier has a very long duration, it can also be considered as two level shifts (see below). Whether the anomaly is then identified as an outlier or two level shifts may be made user configurable. The severity of the outlier anomaly may be selected in relation with the magnitude of the change point and with the lowest resolution in which it was still detected.

A second type of anomaly that may be detected under step 503 is a level shift 701 in the time series 700 as illustrated in Fig. 7. This is also illustrated in Fig. 4 by the change point 420 in the time series 400. The level shift 420 is reflected as a single change point 421-427 in the first set of derived time series 410-416. The size and sign of this change point corresponds to respectively the height and direction of the shift in level. The change point in the derived time series 410-416 caused by level shift 420 becomes more prominent with lower resolutions while the noise becomes less prominent. The level shift will thus become more visible over time as it then appears at the lower resolutions. The severity of the level shift is increased every time it appears at a certain resolution. Because of this, a clear level shift already receives a high severity score on a high resolution scale and will be triggered with little detection delay, while for a less clear level shift, e.g., due to noise in the data, more time will lapse until the severity score is at the same level. Due to the fact that the change points are detected on the detail coefficients, the behaviour of the derived time series before and after the level shift is similar in the derived time series. Therefore, the derived time series do not have to adapt to the level shift as would have been the case when the level shift was detected based on the approximation coefficients. The level shift may further be reflected by two consecutive change points 429-430 with a different sign in the absolute derived time series 460-466. These consecutive change points 429-430 become less prominent with decreasing resolution.

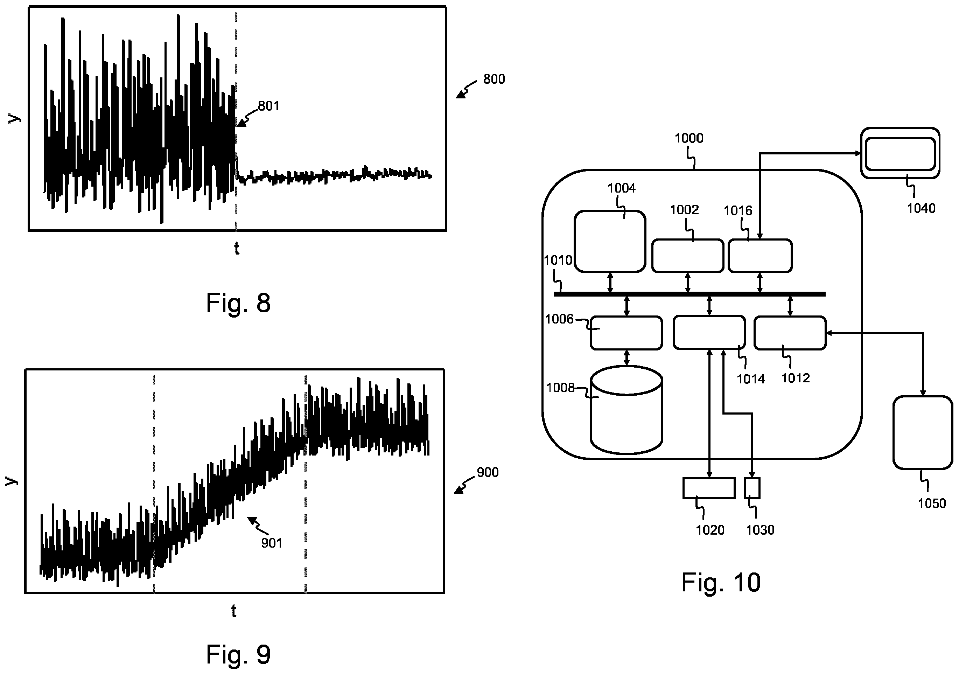

A third type of anomaly that may be detected during step 503 is a change in variance 801 of the time series 800 as illustrated in Fig. 8. Such a change in variance 480 is also illustrated in the time series 400 of Fig. 4 and further reflected as change point 481 of the derived absolute time series 465. The change in variance 480 will correspond to a level shift in the lower-resolution approximation coefficients of the absolute time series 450. Therefore, a change point 480 is identified under step 503 when a single change point is detected in the lower resolutions of the absolute derived time series. Depending on the amount of noise in the data, the change point might not be visible in the higher resolutions. Furthermore, whether the variance change 480 is an increase in variance or a decrease in variance, i.e., the direction of the variance, and the rate at which the variance changes is derived from the size and height of the detected change point(s) 481.

A fourth type of anomaly that may be detected during step 503 is a change in the trend 901 of the time series 900 as illustrated in Fig. 9. A change in the trend 901 is then identified by the following properties of the change points:

- A single change point is detected in the lower resolutions of the absolute derived times series. Depending on the amount of noise in the data, the change point might not be visible in the higher resolutions. This is thus similar to the identification of a change in variance.
- In order to distinguish between a trend change and a variance change, the trend change will become visible as a level shift in the absolute derived time series. The more pronounced the trend change is, the more clear the level shift will be in this series and, thus, the higher the resolution at which it will be visible. The severity may then be assigned based on the amount of resolutions at which this sequence occurs.

A fifth type of anomaly that may be detected during step 503 is when one or more change points occur that cannot be identified as one of the previous types. The severity of such anomaly may then be determined based on the severity and amount of change points.

When the type and severity of the anomaly has been detected under step 503, the method proceeds to step 504 and retrieves previously detected anomalies of the same or similar type from memory store 305. The importance is then determined under the next step 505 based on the amount of occurrences of similar anomalies, i.e., the more the anomaly has occurred, the lesser the assigned importance. Additionally, the importance may also be based on the severity of the anomaly, i.e., the higher the severity in comparison with the severity of previous anomalies, the higher the importance of the anomaly.

Every time a new anomaly has been detected or updated, it is stored in memory store 305, i.e., the type, severity and importance of the anomaly is stored.

When an anomaly has a certain importance or severity, an alert may be triggered, i.e., when the anomaly exceeds a certain predetermined importance threshold and/or severity threshold. These thresholds may further be made user configurable.

Figure 10 shows a suitable computing system 1000 for performing the steps according to the above embodiments. Computing system 1000 may in general be formed as a suitable general purpose computer and comprise a bus 1010, a processor 1002, a local memory 1004, one or more optional input interfaces 1014, one or more optional output interfaces 1016, a communication interface 1012, a storage element interface 1006 and one or more storage elements 1008. Bus 1010 may comprise one or more conductors that permit communication among the components of the computing system 1000. Processor 1002 may include any type of conventional processor or microprocessor that interprets and executes programming instructions. Local memory 1004 may include a random access memory (RAM) or another type of dynamic storage device that stores information and instructions for execution by processor 1002 and/or a read only memory (ROM) or another type of static storage device that stores static information and instructions for use by processor 1002. Input interface 1014 may comprise one or more conventional mechanisms that permit an operator to input information to the computing device 1000, such as a keyboard 1020, a mouse 1030, a pen, voice recognition and/or biometric mechanisms, etc. Output interface 1016 may comprise one or more conventional mechanisms that output information to the operator, such as a display 1040, etc. Communication interface 1012 may comprise any transceiver-like mechanism such as for example one or more Ethernet interfaces that enables computing system 1000 to communicate with other devices and/or systems such as for example with wireless access point 1021 to acquire the parameters at regular intervals or with graphical system 1006 for displaying the generated visual representations of the identified behavioural patterns. The communication interface 1012 of computing system 1000 may be connected to such another computing system by means of a local area network (LAN) or a wide area network (WAN) such as for example the internet. Storage element interface 1006 may comprise a storage interface such as for example a Serial Advanced Technology Attachment (SATA) interface or a Small Computer System Interface (SCSI) for connecting bus 1010 to one or more storage elements 1008, such as one or more local disks, for example SATA disk drives, and control the reading and writing of data to and/or from these storage elements 1008. Although the storage elements 1008 above is described as a local disk, in general any other suitable computer-readable media such as a removable magnetic disk, optical storage media such as a CD or DVD, -ROM disk, solid state drives, flash memory cards, ... could be used. The system 1000 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof, as defined by the appended claims. The present embodiments are therefore to be considered in all respects as illustrative and not restrictive, the scope of the invention being defined by the appended claims rather than by the foregoing description. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions.

**Claims**

1.  A computer-implemented method for real-time detection of anomalies in a time series (100); wherein the method comprises the following steps:

    a) obtaining (301) a next value (161) of the time series; and
    b) updating (303, 323, 130-133, 230-233) a plurality of derived time series (110-113, 210-213, 410-416, 460-466) thereby obtaining a next derived value (150-153, 250-253) for one or more of the derived time series; and wherein the plurality of derived time series corresponds to one or more multi-resolution transformations (160, 260) based on the time series; and
    c) predicting (304, 324), for one or more resolutions of the derived time series, a future derived value (320, 321, 170-173 270-273) of the derived time series and a confidence indicator (180-183, 170-173) for the future derived value; and

d) retrieving, for one or more resolutions of the derived time series, a previously predicted derived value (328, 329) and a confidence indicator of the previously predicted derived value as a prediction of the next derived value; and

e) detecting (306, 326) a change point when the difference between the next derived value and the previously predicted derived value is larger than indicated by the confidence indicator of the previously predicted derived value; and

f) detecting (307) an anomaly in the time series based on the detection (306, 326) of one or more change points at the one or more resolutions of the derived time series;

**characterized in that**:

the one or more multi-resolution transformations (160, 260) based on the time series comprises:

- a first multi-resolution transformation (160) of the time series (100) thereby obtaining a first set (110-113) of derived time series; and
- a second multi-resolution transformation (260) of absolute values (200) of differences between consecutive values of the time series (100) thereby obtaining a second set (210-213) of derived time series.

2. The method according to claim 1 wherein the predicting is performed by a double exponential smoothing.

3. The method according to claim 1 or 2 wherein a derived time series corresponds to a series of detail coefficients (110-113, 210-213) at a respective resolution (120-123, 220-223) of the multi-resolution transformation (160, 260).

4. The method according to any one of the preceding claims wherein the one or more multi-resolution transformations are one or more discrete wavelet decompositions.

5. The method according to claim 1 wherein the first multi-resolution transformation (160) is performed on each consecutive pair of values of the time series and wherein the second multi-resolution transformation is based on each pair of consecutive absolute values (200) of differences between each pair of consecutive values of the time series (100).

6. The method according to claim 3 and 5 wherein the detecting an anomaly comprises:

- identifying (503) the type of the anomaly as an outlier (601, 470) when two consecutive change points (471, 472, 473-478) with different signs are detected in at least one derived time series.

7. The method according to claim 3 wherein the detecting an anomaly comprises:

- identifying (503) the type of the anomaly as a level shift (420, 701) when detecting a single change point (421-427) in at least one of the first set of derived time series (410-416).

8. The method according to claim 3 wherein the detecting an anomaly comprises:

- identifying (503) the type of the anomaly as a change in the variance (480, 801) of the time series when detecting a single change point (481, 482) in the second set of the derived times series.

9. The method according to claim 3 wherein the detecting an anomaly comprises:

- identifying (503) the type of the anomaly as a change in the trend (901) of the time series when detecting a single change point in the second set of the derived time series and a plurality of change points in the first set of the derived time series.

10. The method according to any one of the preceding claims wherein the confidence indicator defines a confidence interval of the previously predicted derived value; and wherein the change point is detected when the next derived value falls outside the confidence interval.

11. The method according to any one of the preceding claims further comprising the following steps:

- comparing (505) the detected anomaly with stored previously detected anomalies; and
- assigning (505) an importance to the detected anomaly based on the difference between the detected anomaly and the previously detected anomalies.

**12.** A computer program product comprising computer-executable instructions for performing the method according to any one of claims 1 to 11 when the program is run on a computer.

**13.** A computer readable storage medium comprising the computer program product according to claim 12.

**14.** A data processing system programmed for carrying out the method according to any one of claims 1 to 11.

**Patentansprüche**

**1.** Computerimplementiertes Verfahren zur Echtzeiterkennung von Anomalien in einer Zeitreihe (100); wobei das Verfahren die folgenden Schritte umfasst:

a) Erhalten (301) eines nächsten Werts (161) der Zeitreihe; und

b) Aktualisieren (303, 323, 130-133, 230-233) einer Vielzahl von abgeleiteten Zeitreihen (110-113, 210-213, 410-416, 460-466), dadurch Erhalten eines nächsten abgeleiteten Werts (150-153, 250-253) für eine oder mehrere der abgeleiteten Zeitreihen; und wobei die Vielzahl von abgeleiteten Zeitreihen einer oder mehreren Mehrfachauflösungstransformationen (160, 260) auf der Grundlage der Zeitreihe entsprechen; und

c) Vorhersagen (304, 324), für eine oder mehrere Auflösungen der abgeleiteten Zeitreihen, eines zukünftigen abgeleiteten Werts (320, 321, 170-173 270-273) der abgeleiteten Zeitreihen und eines Vertrauensindikators (180-183, 170-173) für den zukünftigen abgeleiteten Wert; und

d) Abrufen, für eine oder mehrere Auflösungen der abgeleiteten Zeitreihen, eines zuvor vorhergesagten abgeleiteten Werts (328, 329) und eines Vertrauensindikators des zuvor vorhergesagten abgeleiteten Werts als eine Vorhersage des nächsten abgeleiteten Werts; und

e) Erkennen (306, 326) eines Änderungspunkts, wenn die Differenz zwischen dem nächsten abgeleiteten Wert und dem zuvor vorhergesagten abgeleiteten Wert größer ist als durch den Vertrauensindikator des zuvor vorhergesagten abgeleiteten Werts angegeben; und

f) Erkennen (307) einer Anomalie in der Zeitreihe basierend auf der Erkennung (306, 326) eines oder mehrerer Änderungspunkte bei der einen oder mehreren Auflösungen der abgeleiteten Zeitreihen;

**dadurch gekennzeichnet, dass**:
die eine oder mehreren Mehrfachauflösungstransformationen (160, 260) basierend auf der Zeitreihe umfassen:

- eine erste Mehrfachauflösungstransformation (160) der Zeitreihe (100), wodurch ein erster Satz (110-113) von abgeleiteten Zeitreihen erhalten wird; und

- eine zweite Mehrfachauflösungstransformation (260) von Absolutwerten (200) von Differenzen zwischen aufeinanderfolgenden Werten der Zeitreihe (100), wodurch ein zweiter Satz (210-213) von abgeleiteten Zeitreihen erhalten wird.

**2.** Verfahren nach Anspruch 1, wobei das Vorhersagen durch eine doppelte exponentielle Glättung durchgeführt wird.

**3.** Verfahren nach Anspruch 1 oder 2, wobei eine abgeleitete Zeitreihe einer Reihe von Detailkoeffizienten (110-113, 210-213) bei einer jeweiligen Auflösung (120-123, 220-223) der Mehrfachauflösungstransformation (160, 260) entspricht.

**4.** Verfahren nach einem der vorhergehenden Ansprüche, wobei die eine oder mehreren Mehrfachauflösungstransformationen eine oder mehrere diskrete Wavelet-Zerlegungen sind.

**5.** Verfahren nach Anspruch 1, wobei die erste Mehrfachauflösungstransformation (160) an jedem aufeinanderfolgenden Wertepaar der Zeitreihe durchgeführt wird und wobei die zweite Mehrfachauflösungstransformation auf jedem Paar aufeinanderfolgender Absolutwerte (200) von Differenzen zwischen jedem Paar aufeinanderfolgender Werte der Zeitreihe (100) basiert.

**6.** Verfahren nach Anspruch 3 und 5, wobei das Erkennen einer Anomalie umfasst:

- Identifizieren (503) der Art der Anomalie als Ausreißer (601, 470), wenn zwei aufeinanderfolgende Änderungspunkte (471, 472, 473-478) mit unterschiedlichen Vorzeichen in mindestens einer abgeleiteten Zeitreihe erkannt werden.

7. Verfahren nach Anspruch 3, wobei das Erkennen einer Anomalie umfasst:

- Identifizieren (503) des Typs der Anomalie als eine Niveauverschiebung (420, 701), wenn ein einzelner Änderungspunkt (421-427) in mindestens einer von dem ersten Satz abgeleiteter Zeitreihen (410-416) erkannt wird.

8. Verfahren nach Anspruch 3, wobei das Erkennen einer Anomalie umfasst:

- Identifizieren (503) des Typs der Anomalie als eine Änderung der Varianz (480, 801) der Zeitreihe, wenn ein einzelner Änderungspunkt (481, 482) in dem zweiten Satz abgeleiteter Zeitreihen erkannt wird.

9. Verfahren nach Anspruch 3, wobei das Erkennen einer Anomalie umfasst:

- Identifizieren (503) des Typs der Anomalie als Änderung des Trends (901) der Zeitreihe, wenn ein einzelner Änderungspunkt in dem zweiten Satz abgeleiteter Zeitreihen und eine Vielzahl von Änderungspunkten in dem ersten Satz abgeleiteter Zeitreihen erkannt werden.

10. Verfahren nach einem der vorhergehenden Ansprüche, wobei der Vertrauensindikator ein Konfidenzintervall des zuvor vorhergesagten abgeleiteten Werts definiert; und wobei der Änderungspunkt erkannt wird, wenn der nächste abgeleitete Wert außerhalb des Konfidenzintervalls liegt.

11. Verfahren nach einem der vorhergehenden Ansprüche, das ferner die folgenden Schritte umfasst:

- Vergleichen (505) der erkannten Anomalie mit gespeicherten zuvor erkannten Anomalien; und
- Zuweisen (505) einer Wichtigkeit zu der erkannten Anomalie basierend auf dem Unterschied zwischen der erkannten Anomalie und den zuvor erkannten Anomalien.

12. Computerprogrammprodukt, das computerausführbare Anweisungen zum Durchführen des Verfahrens nach einem der Ansprüche 1 bis 11 umfasst, wenn das Programm auf einem Computer läuft.

13. Computerlesbares Speichermedium, umfassend das Computerprogrammprodukt nach Anspruch 12.

14. Datenverarbeitungssystem, das zum Durchführen des Verfahrens nach einem der Ansprüche 1 bis 11 programmiert ist.

**Revendications**

1. Procédé mis en oeuvre par ordinateur destiné à la détection en temps réel d'anomalies dans une série temporelle (100) ; ledit procédé comprenant les étapes suivantes :

a) obtention (301) d'une valeur suivante (161) de la série temporelle ; et
b) mise à jour (303, 323, 130-133, 230-233) d'une pluralité de séries temporelles dérivées (110-113, 210-213, 410-416, 460-466) obtenant ainsi une valeur dérivée suivante (150-153, 250-253) pour une ou plusieurs des séries temporelles dérivées ; et ladite pluralité de séries temporelles dérivées correspondant à une ou plusieurs transformations multirésolutions (160, 260) sur la base de la série temporelle ; et
c) prédiction (304, 324), pour une ou plusieurs résolutions de la série temporelle dérivée, d'une valeur dérivée future (320, 321, 170-173 270-273) de la série temporelle dérivée et d'un indicateur de confiance (180-183, 170-173) pour la valeur dérivée future ; et
d) récupération, pour une ou plusieurs résolutions de la série temporelle dérivée, d'une valeur dérivée prédite précédemment (328, 329) et d'un indicateur de confiance de la valeur dérivée prédite précédemment en tant que prédiction de la valeur dérivée suivante ; et
e) détection (306, 326) d'un point de changement lorsque la différence entre la valeur dérivée suivante et la valeur dérivée prédite précédemment est supérieure à celle indiquée par l'indicateur de confiance de la valeur dérivée prédite précédemment ; et

f) détection (307) d'une anomalie dans la série temporelle sur la base de la détection (306, 326) d'un ou plusieurs points de changement à la ou les résolutions de la série temporelle dérivée ;

**caractérisé en ce que** :

la ou les transformations multirésolutions (160, 260) basées sur la série temporelle comprennent :

- une première transformation multirésolution (160) de la série temporelle (100) obtenant ainsi un premier ensemble (110-113) de séries temporelles dérivées ; et
- une seconde transformation multirésolution (260) de valeurs absolues (200) de différences entre des valeurs consécutives de la série temporelle (100) obtenant ainsi un second ensemble (210-213) de séries temporelles dérivées.

2. Procédé selon la revendication 1, ladite prédiction étant réalisée par un double lissage exponentiel.

3. Procédé selon la revendication 1 ou 2, une série temporelle dérivée correspondant à une série de coefficients de détail (110-113, 210-213) à une résolution respective (120-123, 220-223) de la transformation multirésolution (160, 260).

4. Procédé selon l'une quelconque des revendications précédentes, ladite ou lesdites transformations multirésolutions étant une ou plusieurs décompositions en ondelettes discrètes.

5. Procédé selon la revendication 1, ladite première transformation multirésolution (160) étant réalisée sur chaque paire consécutive de valeurs de la série temporelle et ladite seconde transformation multirésolution étant basée sur chaque paire de valeurs absolues consécutives (200) de différences entre chaque paire de valeurs consécutives de la série temporelle (100).

6. Procédé selon les revendications 3 et 5, ladite détection d'une anomalie comprenant :

- l'identification (503) du type de l'anomalie sous la forme d'une valeur aberrante (601, 470) lorsque deux points de changement consécutifs (471, 472, 473-478) avec des signes différents sont détectés dans au moins une série temporelle dérivée.

7. Procédé selon la revendication 3, ladite détection d'une anomalie comprenant :

- l'identification (503) du type de l'anomalie sous la forme d'un décalage de niveau (420, 701) lors de la détection d'un point de changement unique (421-427) dans au moins l'une du premier ensemble de séries temporelles dérivées (410-416).

8. Procédé selon la revendication 3, ladite détection d'une anomalie comprenant :

- l'identification (503) du type de l'anomalie sous la forme d'un changement dans la variance (480, 801) de la série temporelle lors de la détection d'un point de changement unique (481, 482) dans le second ensemble des séries temporelles dérivées.

9. Procédé selon la revendication 3, ladite détection d'une anomalie comprenant :

- l'identification (503) du type d'anomalie sous la forme d'un changement dans la tendance (901) de la série temporelle lors de la détection d'un point de changement unique dans le second ensemble de la série temporelle dérivée et d'une pluralité de points de changement dans le premier ensemble de la série temporelle dérivée.

10. Procédé selon l'une quelconque des revendications précédentes, ledit indicateur de confiance définissant un intervalle de confiance de la valeur dérivée précédemment prédite ; et ledit point de changement étant détecté lorsque la valeur dérivée suivante tombe en dehors de l'intervalle de confiance.

11. Procédé selon l'une quelconque des revendications précédentes, comprenant en outre les étapes suivantes :

- comparaison (505) de l'anomalie détectée avec des anomalies précédemment détectées stockées ; et
- attribution (505) d'une importance à l'anomalie détectée sur la base de la différence entre l'anomalie détectée et les anomalies précédemment détectées.

12. Produit-programme informatique comprenant des instructions exécutables par ordinateur destinées à réaliser le procédé selon l'une quelconque des revendications 1 à 11 lorsque ledit programme est exécuté sur un ordinateur.

13. Support de stockage lisible par ordinateur comprenant le produit-programme informatique selon la revendication 12.

14. Système de traitement de données programmé pour effectuer le procédé selon l'une quelconque des revendications 1 à 11.

Fig. 1

EP 3 401 789 B1

Fig. 2

Fig. 3

EP 3 401 789 B1

Fig. 4

Fig. 6

Fig. 7

STORE DETECTED CHANGE POINT(S) — 500

RETRIEVE CHANGE POINTS FOR CURRENT WINDOW — 502

DETERMINE TYPE AND SEVERITY — 503

RETRIEVE PREVIOUS ANOMALIES — 504

DETERMINE IMPORTANCE — 505

Fig. 5

Fig. 8

Fig. 9

Fig. 10

EP 3 401 789 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140006325 A1